# EUROPÄISCHE PATENTSCHRIFT

(11) **EP 3 464 932 B1**
(45) Veröffentlichungstag und Bekanntmachung des Hinweises auf die Patenterteilung: **18.03.2020**
(21) Anmeldenummer: 17724003.3
(22) Anmeldetag: 16.05.2017
(51) Int. Cl.: F16F 9/19, F16F 9/348, F16F 9/512

(54) **FREQUENZSELEKTIVER SCHWINGUNGSDÄMPFER FÜR KRAFTFAHRZEUGE MIT EINEM BYPASSSTEUERVENTIL**
FREQUENCY-SELECTIVE VIBRATION DAMPER FOR MOTOR VEHICLES WITH A BYPASS CONTROL VALVE
AMORTISSEUR DE VIBRATIONS SÉLECTIF EN FRÉQUENCE POUR DES VÉHICULES À MOTEUR COMPRENANT UNE SOUPAPE DE COMMANDE DE DÉRIVATION

(30) Priorität: 23.05.2016 DE 102016208845
(43) Veröffentlichungstag der Anmeldung: 10.04.2019
(73) Patentinhaber: ThyssenKrupp Bilstein GmbH, 58256 Ennepetal (DE); thyssenkrupp AG, 45143 Essen (DE)
(72) Erfinder: SCHNEIDER, Jürgen, 58642 Iserlohn (DE); SCHMIDT, Klaus, 51519 Odenthal (DE); GÖTZ, Ole, 38112 Braunschweig (DE)
(74) Vertreter: thyssenkrupp Intellectual Property GmbH
(86) Internationale Anmeldenummer: PCT/EP2017/061711
(87) Internationale Veröffentlichungsnummer: WO 2017/202647

(56) Entgegenhaltungen:
- WO-A1-2015/185274
- WO-A1-2015/185279
- DE-A1- 1 455 823

## Beschreibung

Die vorliegende Erfindung betrifft einen frequenzselektiven Schwingungsdämpfer für Kraftfahrzeuge mit einem Bypasssteuerventil.

### Stand der Technik

Schwingungsdämpfer dieser Bauart sind im Stand der Technik in einer Vielzahl von Ausführungsformen bekannt.

Aus der DE 602 10 652 T2 ist ein Stoßdämpfer mit einem Kolbenabschnitt bekannt. In dem Kolbenabschnitt ist ein Ventilkörper hubbeweglich zwischen einer Komfortventilscheibe und einer Membran auch bezeichnet als ein Ventilkörper, angeordnet. Zur fluidischen Verbindung von zwei Arbeitsräumen im Dämpferrohr wird ein Hauptpfad, ein Komfortpfad und ein Bypasspfad angeführt, wobei der Bypasspfad fest definiert ist und keine Bypasssteuerung vorsieht. Die Steuerung eines Bypasses insbesondere mit einem Ventilscheibenpaket, welches gleichzeitig ein Komfortventil für einen Komfortpfad und ein Bypasssteuerventil zur Bypasssteuereung aufweist, ist nicht bekannt. Des Weiteren ist in einer Druckkammer zwingend ein Ablauf angeordnet, welcher stromab einer Ventilanordnung mündet.

Die WO 2015/185279 beschreibt einen Schwingungsdämpfer mit einer frequenzabhängigen Dämpfkraftkennlinie umfassend eine Dämpfventileinrichtung mit einer Steueranordnung für einen Schwingungsdämpfer. Die Steueranordnung umfasst einen Steuerkolben, wobei der Hub des Steuerkolbens über ein Federelement eine Vorspannung auf ein Federscheibenventil im Hauptstrom ausübt. Zur fluidischen Verbindung von zwei Arbeitsräumen im Dämpferrohr wird ein Hauptpfad und ein separater Steuerpfad angeführt für eine Steuerpfadfluidströmung, wobei der Steuerpfad über eine Ablaufverbindung fest definiert ist und keine Steuerung vorsieht.

Die Druckschrift WO 2015/185274 A1 bildet den naheliegendsten Stand der Technik.

Problematisch bei dem Stand der Technik bekannten Ausführungsformen ist, dass bei niedrigen Dämpfergeschwindigkeiten der Volumenstrom oftmals nicht ausreicht, um ein im Hauptstrom angeordnetes Scheibenventilpaket zu öffnen, womit das gesamte Dämpfungsfluid über den Bypasspfad strömt. Des Weiteren ist meist keine Regelung, insbesondere keine unabhängige Regelung des Bypassstromes möglich. Zudem weisen im Stand der Technik bekannte Ausführungsformen keine platzsparende Bauweise auf.

Der vorliegenden Erfindung liegt daher die Aufgabe zugrunde, einen verbesserten Schwingungsdämpfer bereitzustellen, bei welchem die zuvor genannten Nachteile vermieden werden. Insbesondere soll mit diesem verbesserten Schwingungsdämpfer ein Schwingungsdämpfer mit kurzen Ansprechzeiten, insbesondere bei niederfrequenten Anregungen bei kleinen Amplituden, zur Verfügung gestellt werden. Des Weiteren soll eine kompakte Bauweise des verbesserten Schwingungsdämpfers ermöglicht werden.

### Offenbarung der Erfindung

Diese Aufgabe wird mit einem Schwingungsdämpfer nach Anspruch 1 gelöst.

Der erfindungsgemäße Schwingungsdämpfer weist gegenüber konventionellen Schwingungsdämpfer den Vorteil von kurzen Ansprechzeiten, insbesondere bei niederfrequenten Anregungen bei kleinen Amplituden, d.h. ohne Komfortverluste bzw. Verschlechterung bei anderen Fahrverhalten und/oder Situationen auf.

Der erfindungsgemäße Schwingungsdämpfer umfasst
- ein mindestens teilweise mit Dämpfungsflüssigkeit gefülltes Dämpferrohr, in dem eine Kolbenstange hin und her bewegbar ist, wobei mit der Kolbenstange ein Arbeitskolben mitbewegbar ist, durch den der Innenraum des Dämpferrohres in einen kolbenstangeseitigen Arbeitsraum und einen kolbenstangenfernen Arbeitsraum aufgeteilt ist,
- ein Dämpfungsmodul zur frequenzabhängigen Steuerung eines zwischen dem kolbenstangenseitigen Arbeitsraum (5) und dem kolbenstangenfernen Arbeitsraum ausgebildeten Komfortbypasses mit einem Komfortpfad, über den Dämpfungsflüssigkeit hydraulisch parallel zur Durchströmung des Arbeitskolbens (4) strömbar ist,
- einen in dem Dämpfungsmodul hubbeweglich aufgenommenen Steuerkolben, welcher kolbenstangenfern eine in dem Dämpfungsmodul angeordnete Druckkammer abgrenzt, wobei die Druckkammer mindestens einen Zulauf aufweist,
wobei das Dämpfungsmodul ein Dämpfungsmodulgehäuse mit einem kolbenstangeseitig angeordneten Gehäusedeckel und einem kolbenstangenfern angeordneten Gehäusetopf, den Steuerkolben und mindestens ein Erstes Scheibenventilpaket umfasst, wobei das mindestens eine erstes Scheibenventilpaket in dem Komfortpfad mit dem Gehäusedeckel ein Komfortventil ausbildet und das mindestens eine erstes Scheibenventilpaket wenigstens ein Bypasssteuerventil mit mindestens einer Bypasszulauföffnung aufweist, wobei über das wenigstens eine Bypasssteuerventil unter Umgehung des Komfortventils Dämpfungsflüssigkeit über einen Bypasssteuerpfad hydraulisch parallel zur Durchströmung des Arbeitskolbens strömbar ist, wobei das Bypasssteuerventil über den Hub des Steuerkolbens gesteuert wird und wobei das erste Scheibenventilpaket mindestens eine Bypassscheibe mit mindestens einer Bypassscheibenöffnung, mindestens eine Abstandsscheibe und eine Komfortscheibe umfasst.

### Detaillierte Beschreibung der Erfindung

Im Rahmen der vorliegenden Erfindung wird unter einer Umgehung des Komfortventils ein von dem Komfortströmungspfad abweichender Strömungspfad verstanden, insbesondere zwischen dem kolbenstangeseitigen Arbeitsraum und dem einen kolbenstangenfernen Arbeitsraum.

Unter einem Zulauf wird im Rahmen der vorliegenden Erfindung eine Öffnung zur Durchströmung von Fluiden verstanden, insbesondere kann ein Zulauf als eine Hülse, eine Bohrung im Steuerkolben ausgeführt sein. Je nach Strömungsrichtung kann der Zulauf auch gleichzeitig als ein Ablauf ausgebildet sein.

In einer weiteren bevorzugten Ausführungsform der Erfindung ist der Zulauf derart angeordnet, dass der Zulauf in gerader Linie, insbesondere geradlinig, in die Druckkammer mündet.

Gemäß einer weiteren Ausführungsform der Erfindung ist der Zulauf derart ausgebildet, dass der Zulauf koaxial zu der Kolbenstange in die Druckkammer mündet.

Nach einer weiteren bevorzugten Ausführungsform der Erfindung weist die Druckkammer einen Ablauf auf, wobei der Ablauf auch der Zulauf in die Druckkammer ist, wobei der Ablauf stromaufwärts in die dem kolbenstangenseitigen Arbeitsraum zugewandten Seite des ersten Scheibenventilpaketes mündet. Beispielsweise kann der Ablauf als eine kolbenstangenseitig angeordnete, axial zentrierte Durchflusshülse als eine Strömungsverbindung ausgeführt sein.

In einer weiteren bevorzugten Ausführungsform der Erfindung ist der Zulauf derart ausgebildet, dass der Zulauf das erste Scheibenventilpaket in dem Dämpfungsmodulgehäuse zentriert, wobei der Zulauf eine Führung des ersten Scheibenventilpakets ausbildet.

Nach einer weiteren bevorzugten Ausführungsform der Erfindung weist der Gehäusedeckel zur Ausbildung des Komfortventils mit dem erste Scheibenventilpaket als Ventilsitz mindestens einen Komfortventilauflagekante auf.

Gemäß einer weiteren bevorzugten Ausführungsform der Erfindung ist der Steuerkolben mechanisch wirkentkoppelt von dem Arbeitskolben angeordnet.

Unter wirkentkoppelt wird im Rahmen der vorliegenden Erfindung verstanden, dass der Steuerkolben keine mechanisch wirksame Abhängigkeit zum Arbeitskolben aufweist, insbesondere ist der Hub des Steuerkolbens mechanisch nicht abhängig von dem Hub des Arbeitskolbens bzw. ist der Steuerkolben kraftentkoppelt von dem Arbeitskolben.

In einer weiteren bevorzugten Ausführungsform der Erfindung ist der Steuerkolben derart angeordnet, dass der Steuerkolben eine Vorspannungsänderung wenigstens auf das Komfortventil des ersten Scheibenventilpakets überträgt.

Im Rahmen der vorliegenden Erfindung wird unter einer Vorspannungsänderung eine dynamische Vorspannung verstanden.

Nach einer weiteren bevorzugten Ausführungsform der Erfindung weist der Steuerkolben mindestens eine randseitig angeordnete Steuerkolbenauflagekante auf, wobei das erste Scheibenventilpaket mit der dem Komfortventil abgewandten Seite auf der mindesten einen randseitig angeordneten Steuerkolbenauflagekante aufliegt. Hierbei bildet das erste Scheibenventilpaket mit der dem Komfortventil abgewandten Seite mit der mindesten einen randseitig angeordneten Steuerkolbenauflagekante einen Ventilsitz aus.

Gemäß einer weiteren bevorzugten Ausführungsform der Erfindung ist der Gehäusetopf derart angeordnet, dass der Gehäusetopf das erste Scheibenventilpaket gegenüber dem Gehäusedeckel verspannt und eine definierte Vorspannung wenigstens auf das Komfortventil des ersten Scheibenventilpakets ausbildet.

Unter einer definierten Vorspannung wird im Rahmen der vorliegenden Erfindung eine statische Spannung verstanden, welche nach einer wunschgemäßen Vorgabe eingestellt wird/wurde. Beispielsweise kann diese statische Spannung als Vorspannung mit einer Schraubverspannung, einer Klemmverspannung oder einer stoffschlüssigen Verbindung, insbesondere einer Schweißverbindung eingestellt werden.

Nach einer weiteren bevorzugten Ausführungsform der Erfindung ist die druckbeaufschlagbare Fläche des Steuerkolbens in der Druckkammer größer als die komfortventilseitig druckbeaufschlagbare Fläche in dem kolbenstangenseitigen Arbeitsraum des ersten Scheibenventilpakets.

In einer weiteren bevorzugten Ausführungsform der Erfindung ist das Dämpfungsmodul in der Zugstufe und/oder der Druckstufe des Schwingungsdämpfers angeordnet.

Gemäß einer weiteren bevorzugten Ausführungsform der Erfindung umfasst das erste Scheibenventilpaket mindestens eine Bypassscheibe mit mindestens einer Bypassscheibenöffnung, mindestens eine Abstandsscheibe und eine Komfortscheibe.

In einer weiteren Ausführungsform der Erfindung ist der Ablauf an dem Gehäusetopf angeordnet, wobei der Ablauf in den kolbenstangenfernen Arbeitsraum mündet.

Nach einer weiteren bevorzugten Ausführungsform der Erfindung weist der Steuerkolben mindestens eine randseitig angeordnete Steuerkolbenauflagekante auf, wobei das erste Scheibenventilpaket mit der dem Komfortventil abgewandten Seite auf der mindesten einen randseitig angeordneten Steuerkolbenauflagekante aufliegt.

Nach einer weiteren bevorzugten Ausführungsform der Erfindung weist das Dämpfungsmodul ein am Zulauf der Druckkammer angeordnetes Rückschlagventil auf.

Im Rahmen der vorliegenden Erfindung wird unter einem Rückschlagventil ein insbesondere federbelastetes Rückschlagventil verstanden, wobei ein Schließelement, insbesondere eine Federscheibe in einer Fließrichtung eine definierte kleine Durchflussöffnung bereitstellt und in der andren Fließrichtung eine vielfach größere Durchflussöffnung bereitstellt.. Beispielsweise kann das Rückschlagventil auf der der Kolbenstange zugewandten Seite des Zulaufs und/oder der der Kolbenstange abgewandten Seite des Zulaufs angeordnet sein.

Gemäß einer weiteren bevorzugten Ausführungsform der Erfindung liegt die Bypassscheibe stromabwärts an der dem kolbenstangenfernen Arbeitsraum zugewandten Seite der Bypassscheibe auf der Steuerkolbenauflagekante in einem vorgespannten Zustand auf und ist die mindestens eine Abstandsscheibe derart geometrisch ausgebildet, dass die Abstandsscheibe die Bypassscheibenöffnung nicht überdeckt und die mindestens eine Abstandsscheibe die Bypassscheibe von der stromaufwärts auf der dem kolbenstangennahen Arbeitsraum zugewandten Seite angeordneten Komfortscheibe beabstandet.

In einer weiteren bevorzugten Ausführungsform der Erfindung weist die Komfortscheibe die mindestens eine Bypasszulauföffnung auf und die Abstandsscheibe ist derart geometrisch ausgebildet, dass die Abstandsscheibe die mindestens eine Bypasszulauföffnung nicht überdeckt.

Nach einer weiteren bevorzugten Ausführungsform der Erfindung ist die mindestens eine Bypasszulauföffnung derart geometrisch ausgebildet, dass die Bypasszulauföffnung auf der dem Zulauf zugewandten Seite des ersten Scheibenventilpakets durch das erste Scheibenventilpaket verläuft von der dem kolbenstangennahen Arbeitsraum zugewandten Seite der Komfortscheibe zu der dem kolbenstangenfernen Arbeitsraum zugewandten Seite der Bypassscheibe.

Gemäß einer weiteren bevorzugten Ausführungsform der Erfindung weist der Steuerkolben die mindestens eine Bypasszulauföffnung auf und das erste Scheibenventilpaket weist zusätzlich eine Bypass-Abstandsscheibe auf, wobei die Bypass-Abstandsscheibe in Richtung zu der Außenseite des ersten Scheibenventilpakets nach der Bypassscheibe beweglich zwischen der Bypassscheibe und dem Steuerkolben angeordnet ist und die Bypass-Abstandsscheibe ist derart geometrisch ausgebildet, dass die Bypass-Abstandsscheibe die mindestens eine Bypasszulauföffnung überdeckt und die mindestens eine Bypasszulauföffnung die Bypassscheibenöffnung der Bypassscheibe zumindest nicht vollständig überdeckt.

Unter zumindest nicht vollständig überdeckt wird im Rahmen der vorliegenden Erfindung verstanden, dass gewährleistet ist, dass die Bypassscheibenöffnung der Bypassscheibe nicht vollständig abgedeckt ist und in jedem Fall eine teilweise Durchströmung der Bypassscheibenöffnung möglich ist.

### Kurze Beschreibung der Zeichnungen

Der erfindungsgemäße Schwingungsdämpfer wird anhand der Zeichnungen erläutert.
- Fig. 1: zeigt schematisch einen Längsschnitt im Bereich eines Arbeitskolbens und eines Dämpfungsmoduls durch einen Schwingungsdämpfer gemäß einer Ausführungsform der Erfindung,
- Fig. 2: zeigt schematisch einen Längsschnitt im Bereich eines Dämpfungsmoduls durch einen Steuerkolben und ein erstes Scheibenventilpaket gemäß einer weiteren Ausführungsform des Dämpfungsmoduls der Erfindung,
- Fig. 3: zeigt schematisch einen Längsschnitt im Bereich des Dämpfungsmoduls durch einen Steuerkolben und ein erstes Scheibenventilpaket gemäß einer weiteren Ausführungsform des Dämpfungsmoduls der Erfindung.

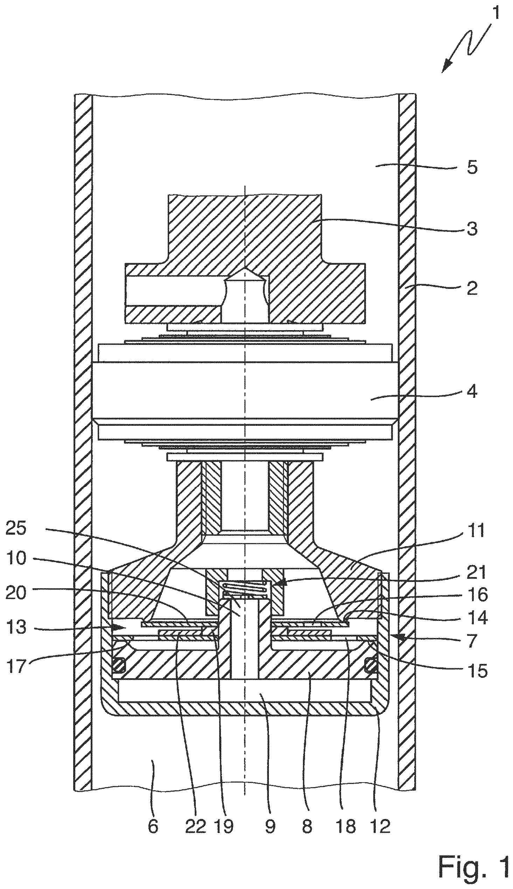

In der Fig. 1 ist ein Längsschnitt im Bereich eines Arbeitskolbens 4 und eines Dämpfungsmoduls 7 durch einen Schwingungsdämpfer 1 mit einem Dämpferrohr 2, einer Kolbenstange 3 und dem an der Kolbenstange 3 angeordneten Arbeitskolben 4 und des Dämpfungsmoduls 7 gemäß einer Ausführungsform der Erfindung dargestellt. Der Arbeitskolben 4 unterteilt den Innenraum des Dämpferrohres 2 in einen kolbenstangeseitigen Arbeitsraum 5 und einen kolbenstangenfernen Arbeitsraum 6. Während eines Zug- oder Druckstufenvorgangs kann ein Hauptstrom aus dem kolbenstangenseitigen Arbeitsraum 5 den Arbeitskolben 4 durchströmen, um in den kolbenstangenfernen Arbeitsraum 6 zu gelangen. Ein Komfortstrom kann über eine Öffnung in der Kolbenstange 3 in das Dämpfungsmodul 7 strömen. Das Dämpfungsmodul 7 umfasst ein Dämpfungsmodulgehäuse mit einem kolbenstangenseitig angeordneten Gehäusedeckel 11, einen kolbenstangenfern angeordneten Gehäusetopf 12, einen Steuerkolben 8 und mindestens ein erstes Scheibenventilpaket 13. Der Gehäusedeckel 11 weist eine Komfortventilauflagekannte 14 auf. Der Steuerkolben 8 weist eine Steuerkolbenauflagekannte 15 auf und ist hubbeweglich und kolbenstangenfern angeordnet und grenzt eine in dem Dämpfungsmodul 7 angeordnete Druckkammer 9 ab. Die Druckkammer 9 weist einen Zulauf 10 auf. Der Zulauf 10 läuft durch den Steuerkolben 8 und ist beispielhaft als eine Hülse dargestellt. In der dargestellten Ausführungsform fungiert der Zulauf 10 auch als ein Ablauf 25. Das erste Scheibenventilpaket 13 umfasst eine Bypassscheibe 17 mit einer Bypassscheibenöffnung (18), eine Abstandsscheibe 19 und eine Komfortscheibe 20 mit einer Bypasszulauföffnung 16. Die Abstandsscheibe 19 ist zwischen der Komfortscheibe 20 und der Bypassscheibe 17 angeordnet und beanstandet beide Scheiben, wobei die Abstandsscheibe 19 die Bypasszulauföffnung 16 der Komfortscheibe 20 sowie die Bypassscheibenöffnung 18 der Bypassscheibe 17 nicht überdeckt. Koaxial zu der Abstandsscheibe 19 ist eine Bypass-Abstandsscheibe 22 angeordnet, wobei die Bypass-Abstandsscheibe 22 die Bypassscheibenöffnung 18 der Bypassscheibe 17 zumindest nicht vollständig überdeckt. Das erste Scheibenventilpaket 13 ist vorgespannt zwischen der Komfortventilauflagekannte 14 und der Steuerkolbenauflagekannte 15 angeordnet. Das erste Scheibenventilpaket 13 wird durch die als Hülse an dem Steuerkolben 8 ausgebildeten Zulauf 10 zentriert. In dem Dämpfungsmodul 7 kann zusätzlich ein Rückschlagventil 21 angeordnet sein. Das Rückschlagventil 21 beschleunigt eine Entleerung der Dämpfungskammer 9 über den Ablauf 25.

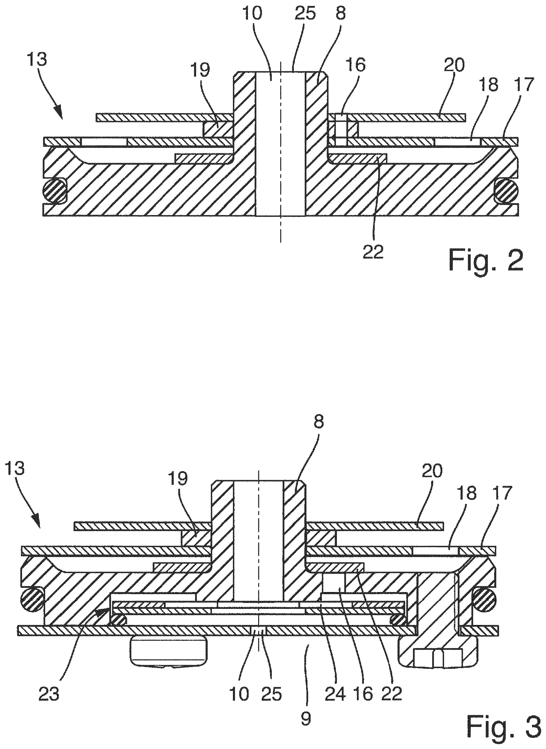

In der Fig. 2 ist ein Längsschnitt im Bereich des Dämpfungsmoduls 7 durch den Steuerkolben 8 und das erste Scheibenventilpaket 13 gemäß einer weiteren Ausführungsform des Dämpfungsmoduls der Erfindung dargestellt. Im Unterschied zu Figur 1 verläuft in dem ersten Scheibenventilpaket 13 des Dämpfungsmoduls 7 die Bypasszulauföffnung 16 durch das erste Scheibenventilpaket 13 von der dem kolbenstangennahen Arbeitsraum zugewandten Seite der Komfortscheibe 20 zu der dem kolbenstangenfernen Arbeitsraum zugewandten Seite der Bypassscheibe 17. Das erste Scheibenventilpaket 13 weist zusätzlich eine Bypass-Abstandsscheibe 22 auf, wobei die Bypass-Abstandsscheibe 22 in Richtung zu der Außenseite des ersten Scheibenventilpakets 13 nach der Bypassscheibe 17 angeordnet ist, wobei die Bypass-Abstandsscheibe 22 die Bypassscheibenöffnung 18 der Bypassscheibe 17 zumindest nicht vollständig überdeckt. Das erste Scheibenventilpaket 13 wird auf der kolbenstangennahen Seite durch den Zulauf 10 zentriert.

In der Fig. 3 ist ein Längsschnitt im Bereich des Dämpfungsmoduls 7 durch den Steuerkolben 8 und das erste Scheibenventilpaket 13 gemäß einer weiteren Ausführungsform des Dämpfungsmoduls 7 der Erfindung dargestellt. Das erste Scheibenventilpaket 13 weist zusätzlich eine Bypass-Abstandsscheibe 22 auf. Im Unterschied zu den Fig. 1 und/oder Fig. 2 weist der Steuerkolben 8 die mindestens eine Bypasszulauföffnung 16 auf. Die Bypass-Abstandsscheibe 22 ist in Richtung zu der Außenseite des ersten Scheibenventilpakets 13 nach der Bypassscheibe 17 beweglich zwischen der Bypassscheibe 17 und dem Steuerkolben 8 angeordnet. Zudem überdeckt die Bypass-Abstandsscheibe 22 die Bypassscheibenöffnung 18 der Bypassscheibe 17 zumindest nicht vollständig. Des Weiteren ist auf der der Druckkammer 9 zugewandten Seite des Steuerkolbens 8 an dem Steuerkolben 8 ein weiteres Scheibenventilpaket 23 angeordnet. Das weitere Scheibenventilpaket 23 weist eine Durchflussöffnung 24 zu der mindestens einen Bypasszulauföffnung 16 auf. In der dargestellten Ausführungsform fungiert der Zulauf 10 auch als ein Ablauf 25.

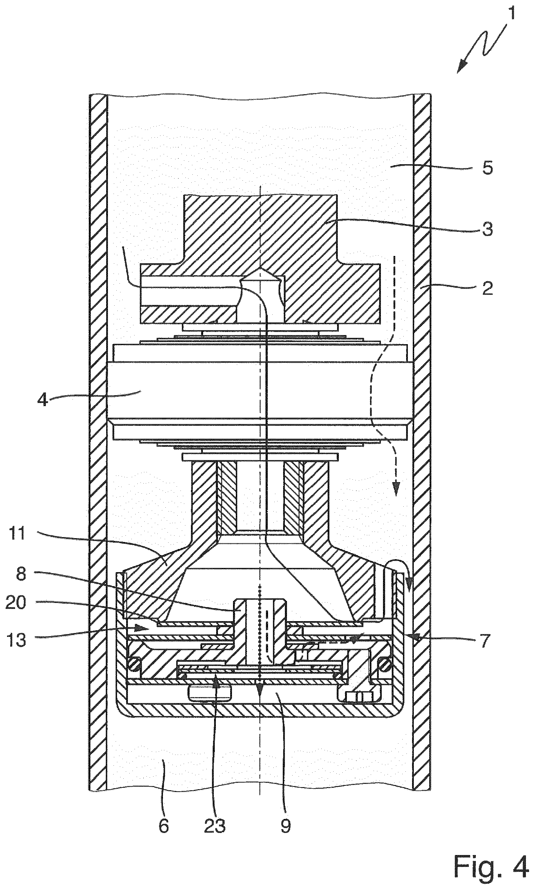

In der Figur 4 ist ein Längsschnitt im Bereich des Arbeitskolbens nach Fig. 1 und im Bereich des Dämpfungsmoduls nach Fig. 3 gemäß einer weiteren Ausführungsform der Erfindung dargestellt. Die Durchströmbarkeit des Arbeitskolbens 4 wird mit einem mit langen Strichen dargestellten unterbrochenen Strömungspfeil dargestellt und als Hauptpfad bezeichnet. Der Hauptpfad stellt eine fluidische Verbindung über den Arbeitskolben 4 zwischen dem kolbenstangeseitigen Arbeitsraum 5 und dem kolbenstangenfernen Arbeitsraum 6 her. Eine weitere fluidische Verbindung führt an dem Arbeitskolben 4 vorbei und ist als ein Komfortpfad mit einem durchgezogenen Strömungspfeil dargestellt. Der Komfortpfad stellt eine fluidische Verbindung durch die Kolbenstange 3 zwischen dem kolbenstangeseitigen Arbeitsraum 5 und dem kolbenstangenfernen Arbeitsraum 6 her. Der Austritt des Komfortpfades in den kolbenstangenfernen Arbeitsraum 6 erfolgt durch Abheben der Komfortscheibe 20 von der Komfortventilauflagekante 14. Als ein weiterer fluidischer Strömungspfad ist ein Steuerpfad mit einem gepunkteten Strömungspfeil dargestellt. Der Steuerpfad führt über den Zulauf 10 des Steuerkolbens 8 in die Druckkammer 9. Die fluidische Strömung des Steuerpfades steuert die Position des Steuerkolbens 9 innerhalb des Dämpfungsmoduls 7 und beeinflusst die Kraftwirkung auf die Komfortscheibe 20 des ersten Scheibenventilpaketes 13, wobei die die Komfortscheibe 20 entweder auf der Komfortventilauflagekante 14 aufliegt oder diese frei gibt zur Durchströmung des Komfortpfades in den kolbenstangenfernen Arbeitsraum 6. Als ein weiterer fluidischer Strömungspfad ist ein Bypasssteuerpfad mit einem mit kurzen Strichen dargestellten unterbrochenen Strömungspfeil dargestellt und als Steuerbypasspfad bezeichnet. Der Steuerbypasspfad umgeht das Ventil zwischen der Komfortscheibe 20 und der Komfortventilauflagekante 14 und stellt eine strömungstechnische Verbindung zwischen dem kolbenstangeseitigen Arbeitsraum 5 und dem kolbenstangenfernen Arbeitsraum 6 dar. Eine Steuermöglichkeit des Steuerbypassstromes ist über das dargestellte zweite Scheibenventilpaket 23 und/oder der Bewegung des Steuerkolbens 8 möglich.

### Gewerbliche Anwendbarkeit

Schwingungsdämpfer für Fahrzeuge der vorbeschriebenen Art werden in der Produktion von Fahrzeugen, insbesondere von Fahrwerken von Kraftfahrzeuge eingesetzt.

### Bezugszeichenliste

1 = Schwingungsdämpfer
2 = Dämpferrohr
3 = Kolbenstange
4 = Arbeitskolben
5 = kolbenstangenseitiger Arbeitsraum
6 = Kolbenstangenferner Arbeitsraum
7 = Dämpfungsmodul
8 = Steuerkolben
9 = Druckkammer
10 = Zulauf
11 = Gehäusedeckel
12 = Gehäusetopf
13 = erstes Scheibenventilpaket
14 = Komfortventilauflagekante
15 = Steuerkolbenauflagekante
16 = Bypasszulauföffnung
17 = Bypassscheibe
18 = Bypassscheibenöffnung
19 = Abstandsscheibe
20 = Komfortscheibe
21 = Rückschlagventil
22 = Bypass-Abstandsscheibe
23 = weiteres Scheibenventilpaket
24 = Durchflussöffnung
25 = Ablauf
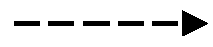 = Hauptpfad
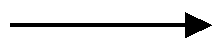 = Komfortpfad
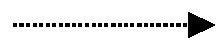 = Steuerpfad
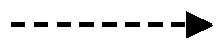 = Steuerbypasspfad

## Patentansprüche

1. Schwingungsdämpfer (1) umfassend
- ein mindestens teilweise mit Dämpfungsflüssigkeit gefülltes Dämpferrohr (2), in dem eine Kolbenstange (3) hin und her bewegbar ist, wobei mit der Kolbenstange (3) ein Arbeitskolben (4) mitbewegbar ist, durch den der Innenraum des Dämpferrohres in einen kolbenstangeseitigen Arbeitsraum (5) und einen kolbenstangenfernen Arbeitsraum (6) aufgeteilt ist,
- ein Dämpfungsmodul (7) zur frequenzabhängigen Steuerung eines zwischen dem kolbenstangenseitigen Arbeitsraum (5) und dem kolbenstangenfernen Arbeitsraum (6) ausgebildeten Komfortbypasses mit einem Komfortpfad, über den Dämpfungsflüssigkeit hydraulisch parallel zur Durchströmung des Arbeitskolbens (4) strömbar ist,
- einen in dem Dämpfungsmodul (7) hubbeweglich aufgenommenen Steuerkolben (8), welcher kolbenstangenfern eine in dem Dämpfungsmodul (7) angeordnete Druckkammer (9) abgrenzt, wobei die Druckkammer (9) mindestens einen Zulauf (10) aufweist,
**dadurch gekennzeichnet, dass**
das Dämpfungsmodul (7) ein Dämpfungsmodulgehäuse mit einem kolbenstangeseitig angeordneten Gehäusedeckel (11) und einem kolbenstangenfern angeordneten Gehäusetopf (12), den Steuerkolben (8) und mindestens ein Erstes Scheibenventilpaket (13) umfasst, wobei das mindestens eine erstes Scheibenventilpaket (13) in dem Komfortpfad mit dem Gehäusedeckel (11) ein Komfortventil ausbildet und das mindestens eine erstes Scheibenventilpaket (13) wenigstens ein Bypasssteuerventil mit mindestens einer Bypasszulauföffnung (16) aufweist, wobei über das wenigstens eine Bypasssteuerventil unter Umgehung des Komfortventils Dämpfungsflüssigkeit über einen Bypasssteuerpfad hydraulisch parallel zur Durchströmung des Arbeitskolbens (4) strömbar ist, wobei das Bypasssteuerventil über den Hub des Steuerkolbens (8) gesteuert wird und wobei das erste Scheibenventilpaket (13) mindestens eine Bypassscheibe (17) mit mindestens einer Bypassscheibenöffnung (18), mindestens eine Abstandsscheibe (19) und eine Komfortscheibe (20) umfasst.

2. Schwingungsdämpfer (1) nach dem vorherigen Anspruch 1, **dadurch gekennzeichnet, dass** die Druckkammer (9) einen Ablauf (25) aufweist, wobei der Ablauf (25) auch der Zulauf (10) in die Druckkammer (9) ist, wobei der Ablauf (25) stromaufwärts in die dem kolbenstangenseitigen Arbeitsraum zugewandten Seite des Scheibenventilpaketes (13) mündet.

3. Schwingungsdämpfer (1) nach dem vorherigen Anspruch 1, **dadurch gekennzeichnet, dass** die Druckkammer (9) einen Ablauf (25) aufweist, wobei der Ablauf (25) an dem Gehäusetopf (12) angeordnet ist, wobei der Ablauf (25) in den kolbenstangenfernen Arbeitsraum (6) mündet.

4. Schwingungsdämpfer (1) nach einem der vorherigen Ansprüche 1 bis 3, **dadurch gekennzeichnet, dass** der Gehäusedeckel (11) zur Ausbildung des Komfortventils mit dem ersten Scheibenventilpaket (13) als Ventilsitz mindestens eine Komfortventilauflagekante (14) aufweist.

5. Schwingungsdämpfer (1) nach einem der vorherigen Ansprüche 1 bis 4, **dadurch gekennzeichnet, dass** der Steuerkolben (8) mindestens eine randseitig angeordnete Steuerkolbenauflagekante (15) aufweist, wobei das erste Scheibenventilpaket (13) mit der dem Komfortventil abgewandten Seite auf der mindesten einen randseitig angeordneten Steuerkolbenauflagekante (15) aufliegt.

6. Schwingungsdämpfer (1) nach einem vorherigen Anspruch 1 bis 5, **dadurch gekennzeichnet, dass** das Dämpfungsmodul (7) ein am Zulauf (10) der Druckkammer (9) angeordnetes Rückschlagventil (21) aufweist.

7. Schwingungsdämpfer (1) nach einem der vorherigen Ansprüche 1 bis 6, **dadurch gekennzeichnet, dass** die Bypassscheibe (17) stromabwärts an der dem kolbenstangenfernen Arbeitsraum zugewandten Seite auf der Steuerkolbenauflagekante (15) in einem vorgespannten Zustand aufliegt und wobei die mindestens eine Abstandsscheibe (19) derart geometrisch ausgebildet ist, dass die Abstandsscheibe (19) die Bypassscheibenöffnung (18) nicht überdeckt und die mindestens eine Abstandsscheibe (19) die Bypassscheibe (17) von der stromaufwärts auf der dem kolbenstangennahen Arbeitsraum zugewandten Seite angeordneten Komfortscheibe (20) beabstandet.

8. Schwingungsdämpfer (1) nach einem der vorherigen Ansprüche 1 bis 7, **dadurch gekennzeichnet, dass** die Komfortscheibe (20) die mindestens eine Bypasszulauföffnung (16) aufweist und wobei die Abstandsscheibe (19) derart geometrisch ausgebildet ist, dass die Abstandsscheibe (19) die mindestens eine Bypasszulauföffnung (16) nicht überdeckt.

9. Schwingungsdämpfer (1) nach einem der vorherigen Ansprüche 1 bis 7, **dadurch gekennzeichnet, dass** die mindestens eine Bypasszulauföffnung (16) derart geometrisch ausgebildet ist, dass die Bypasszulauföffnung (16) auf der dem Zulauf (10) zugewandten Seite des ersten Scheibenventilpakets (13) durch das erste Scheibenventilpaket (13) verläuft von der dem kolbenstangennahen Arbeitsraum zugewandten Seite der Komfortscheibe (20) zu der dem kolbenstangenfernen Arbeitsraum zugewandten Seite der Bypassscheibe (17).

10. Schwingungsdämpfer (1) nach einem der vorherigen Ansprüche 1 bis 7, **dadurch gekennzeichnet, dass** der Steuerkolben (8) die mindestens eine Bypasszulauföffnung (16) aufweist und das erste Scheibenventilpaket (13) zusätzlich eine Bypass-Abstandsscheibe (22) aufweist, wobei die Bypass-Abstandsscheibe (22) in Richtung zu der Außenseite des ersten Scheibenventilpakets (13) nach der Bypassscheibe (17) beweglich zwischen der Bypassscheibe (17) und dem Steuerkolben (8) angeordnet ist und die Bypass-Abstandsscheibe (22) derart geometrisch ausgebildet ist, dass die Bypass-Abstandsscheibe (22) die mindestens eine Bypasszulauföffnung (16) überdeckt und die Bypass-Abstandsscheibe (22) (16) die Bypassscheibenöffnung (18) der Bypassscheibe (17) zumindest nicht vollständig überdeckt.

11. Schwingungsdämpfer (1) nach Anspruch 10, **dadurch gekennzeichnet, dass** in der Druckkammer (9) an dem Steuerkolben (8) ein weiteres Scheibenventilpaket (23) angeordnet ist, wobei das weiteres Scheibenventilpaket (23) eine Durchflussöffnung (24) zu der mindestens einen Bypasszulauföffnung (16) aufweist.

## Claims

1. Vibration damper (1) comprising
- a damper tube (2) which is at least partially filled with damping fluid and in which a piston rod (3) is movable back and forth, wherein a working piston (4) is movable jointly with the piston rod (3), by means of which working piston the interior space of the damper tube is divided into a piston-rod-side working space (5) and a piston-rod-remote working space (6),
- a damping module (7) for the frequency-dependent control of a comfort bypass which is formed between the piston-rod-side working space (5) and the piston-rod-remote working space (6) and which comprises a comfort path via which damping fluid can be caused to flow hydraulically in parallel with respect to the flow through the working piston (4),
- a control piston (8) which is received, such that it can perform stroke movements, in the damping module (7) and which, remote from the piston rod, delimits a pressure chamber (9) arranged in the damping module (7), wherein the pressure chamber (9) comprises at least one inlet (10),
**characterized in that**
the damping module (7) comprises a damping module housing, with a housing cover (11) arranged at the piston rod side and with a housing pot (12) arranged remote from the piston rod, comprises the control piston (8) and comprises at least one first disk valve assembly (13), wherein the at least one first disk valve assembly (13), in the comfort path with the housing cover (11), forms a comfort valve, and the at least one first disk valve assembly (13) comprises at least one bypass control valve with at least one bypass inlet opening (16), wherein, via the at least one bypass control valve, bypassing the comfort valve, damping fluid can be caused to flow via a bypass control path hydraulically in parallel with respect to the flow through the working piston (4), wherein the bypass control valve is controlled by means of the stroke of the control piston (8) and wherein the first disk valve assembly (13) comprises at least one bypass disk (17) with at least one bypass disk opening (18), comprises at least one spacer disk (19) and comprises a comfort disk (20).

2. Vibration damper (1) according to the preceding Claim 1, **characterized in that** the pressure chamber (9) comprises an outlet (25), wherein the outlet (25) is also the inlet (10) into the pressure chamber (9), wherein the outlet (25) opens, upstream, into that side of the disk valve assembly (13) which faces toward the piston-rod-side working space.

3. Vibration damper (1) according to the preceding Claim 1, **characterized in that** the pressure chamber (9) comprises an outlet (25), wherein the outlet (25) is arranged on the housing pot (12), wherein the outlet (25) opens into the piston-rod-remote working space (6).

4. Vibration damper (1) according to one of the preceding Claims 1 to 3, **characterized in that** the housing cover (11), to form the comfort valve with the first disk valve assembly (13), comprises at least one comfort valve support edge (14) as valve seat.

5. Vibration damper (1) according to one of the preceding Claims 1 to 4, **characterized in that** the control piston (8) comprises at least one control piston support edge (15) arranged at the edge, wherein the first disk valve assembly (13) lies with the side averted from the comfort valve on the at least one control piston support edge (15) arranged at the edge.

6. Vibration damper (1) according to one of the preceding Claims 1 to 5, **characterized in that** the damping module (7) comprises a check valve (21) arranged at the inlet (10) of the pressure chamber (9) .

7. Vibration damper (1) according to one of the preceding Claims 1 to 6, **characterized in that** the bypass disk (17), downstream on that side of the bypass disk which faces toward the piston-rod-remote working space, lies on the control piston support edge (15) in a preloaded state, and wherein the at least one spacer disk (19) is geometrically designed such that the spacer disk (19) does not cover the bypass disk opening (18), and the at least one spacer disk (19) spaces the bypass disk (17) apart from the comfort disk (20) which is arranged upstream on the side facing toward the piston-rod-side working space.

8. Vibration damper (1) according to one of the preceding Claims 1 to 7, **characterized in that** the comfort disk (20) comprises the at least one bypass inlet opening (16), and wherein the spacer disk (19) is geometrically designed such that the spacer disk (19) does not cover the at least one bypass inlet opening (16).

9. Vibration damper (1) according to one of the preceding Claims 1 to 7, **characterized in that** the at least one bypass inlet opening (16) is geometrically designed such that the bypass inlet opening (16), on that side of the first disk valve assembly (13) which faces toward the inlet (10), runs through the first disk valve assembly (13) from that side of the comfort disk (20) which faces toward the piston-rod-side working space to that side of the bypass disk (17) which faces toward the piston-rod-remote working space.

10. Vibration damper (1) according to one of the preceding Claims 1 to 7, **characterized in that** the control piston (8) comprises the at least one bypass inlet opening (16) and the first disk valve assembly (13) additionally comprises a bypass spacer disk (22), wherein the bypass spacer disk (22) is arranged, downstream of the bypass disk (17) in the direction of the outer side of the first disk valve assembly (13), movably between the bypass disk (17) and the control piston (8), and the bypass spacer disk (22) is geometrically designed such that the bypass spacer disk (22) covers the at least one bypass inlet opening (16) and the bypass spacer disk (22) (16) at least does not completely cover the bypass disk opening (18) of the bypass disk (17).

11. Vibration damper (1) according to Claim 10, **characterized in that** in the pressure chamber (9) a further disk valve assembly (23) is arranged on the control piston (8), wherein the further disk valve assembly (23) comprises a throughflow opening (24) to the at least one bypass inlet opening (16).

## Revendications

1. Amortisseur de vibrations (1) comportant
- un tube d'amortisseur (2) rempli au moins partiellement de liquide d'amortissement, tube dans lequel une tige de piston (3) peut être animée d'un mouvement de va-et-vient, un piston de travail (4) pouvant être déplacé avec la tige de piston (3), piston de travail au moyen duquel l'espace intérieur du tube d'amortisseur est divisé en un espace de travail (5) côté tige de piston et un espace de travail (6) éloigné de la tige de piston,
- un module d'amortissement (7) pour la commande, en fonction de la fréquence, d'une dérivation de confort formée entre l'espace de travail (5) côté tige de piston et l'espace de travail (6) éloigné de la tige de piston, comprenant un trajet de confort par le biais duquel du liquide d'amortissement peut s'écouler hydrauliquement parallèlement à l'écoulement à travers le piston de travail (4),
- un piston de commande (8) reçu de manière à effectuer un mouvement de va-et-vient dans le module d'amortissement (7), lequel piston de commande délimite, de manière éloignée de la tige de piston, une chambre de pression (9) disposée dans le module d'amortissement (7), la chambre de pression (9) comprenant au moins une entrée (10),
**caractérisé en ce que**
le module d'amortissement (7) comporte un boîtier de module d'amortissement doté d'un couvercle de boîtier (11) disposé du côté de la tige de piston et d'un pot de boîtier (12) disposé de manière éloignée de la tige de piston, le piston de commande (8) et au moins un premier groupe de soupapes à disques (13), ledit au moins un premier groupe de soupapes à disques (13) formant une soupape de confort avec le couvercle de boîtier (11) dans le trajet de confort et ledit au moins un premier groupe de soupapes à disques (13) comprenant au moins une soupape de commande de dérivation dotée d'au moins une ouverture d'entrée de dérivation (16), du liquide d'amortissement pouvant s'écouler hydrauliquement parallèlement à l'écoulement à travers le piston de travail (4) sur un trajet de commande de dérivation par le biais de ladite au moins une soupape de commande de dérivation en contournant la soupape de confort, la soupape de commande de dérivation étant commandée par le biais de la course du piston de commande (8) et le premier groupe de soupapes à disques (13) comprenant au moins un disque de dérivation (17) doté d'au moins une ouverture de disque de dérivation (18), au moins un disque d'espacement (19) et un disque de confort (20).

2. Amortisseur de vibrations (1) selon la revendication 1 précédente, **caractérisé en ce que** la chambre de pression (9) comprend une sortie (25), la sortie (25) étant également l'entrée (10) dans la chambre de pression (9), la sortie (25) débouchant en amont dans le côté du groupe de soupapes à disques (13) tourné vers l'espace de travail côté tige de piston.

3. Amortisseur de vibrations (1) selon la revendication 1 précédente, **caractérisé en ce que** la chambre de pression (9) comprend une sortie (25), la sortie (25) étant disposée sur le pot de boîtier (12), la sortie (25) débouchant dans l'espace de travail (6) éloigné de la tige de piston.

4. Amortisseur de vibrations (1) selon l'une des revendications précédentes 1 à 3, **caractérisé en ce que** le couvercle de boîtier (11), pour former la soupape de confort avec le premier groupe de soupapes à disques (13), comprend au moins une arête de support de soupape de confort (14) en tant que siège de soupape.

5. Amortisseur de vibrations (1) selon l'une des revendications précédentes 1 à 4, **caractérisé en ce que** le piston de commande (8) comprend au moins une arête de support de piston de commande (15) disposée du côté du bord, le premier groupe de soupapes à disques (13) reposant, par le côté opposé à la soupape de confort, sur ladite au moins une arête de support de piston de commande (15) disposée du côté du bord.

6. Amortisseur de vibrations (1) selon l'une des revendications précédentes 1 à 5, **caractérisé en ce que** le module d'amortissement (7) comprend une soupape antiretour (21) disposée au niveau de l'entrée (10) de la chambre de pression (9).

7. Amortisseur de vibrations (1) selon l'une des revendications précédentes 1 à 6, **caractérisé en ce que** le disque de dérivation (17) repose, en aval sur le côté tourné vers l'espace de travail éloigné de la tige de piston, sur l'arête de support de piston de commande (15) dans un état précontraint, et ledit au moins un disque d'espacement (19) étant formé géométriquement de telle sorte que le disque d'espacement (19) ne recouvre pas l'ouverture de disque de dérivation (18) et ledit au moins un disque d'espacement (19) espaçant le disque de dérivation (17) du disque de confort (20) disposé en amont sur le côté tourné vers l'espace de travail proche de la tige de piston.

8. Amortisseur de vibrations (1) selon l'une des revendications précédentes 1 à 7, **caractérisé en ce que** le disque de confort (20) comprend ladite au moins une ouverture d'entrée de dérivation (16), et le disque d'espacement (19) étant formé géométriquement de telle sorte que le disque d'espacement (19) ne recouvre pas ladite au moins une ouverture d'entrée de dérivation (16) .

9. Amortisseur de vibrations (1) selon l'une des revendications précédentes 1 à 7, **caractérisé en ce que** ladite au moins une ouverture d'entrée de dérivation (16) est formée géométriquement de telle sorte que l'ouverture d'entrée de dérivation (16), sur le côté du premier groupe de soupapes à disques (13) tourné vers l'entrée (10), s'étend à travers le premier groupe de soupapes à disques (13) du côté du disque de confort (20) tourné vers l'espace de travail proche de la tige de piston au côté du disque de dérivation (17) tourné vers l'espace de travail éloigné de la tige de piston.

10. Amortisseur de vibrations (1) selon l'une des revendications précédentes 1 à 7, **caractérisé en ce que** le piston de commande (8) comprend ladite au moins une ouverture d'entrée de dérivation (16) et le premier groupe de soupapes à disques (13) comprend en outre un disque d'espacement de dérivation (22), le disque d'espacement de dérivation (22) étant disposé de manière mobile entre le disque de dérivation (17) et le piston de commande (8) après le disque de dérivation (17) en direction du côté extérieur du premier groupe de soupapes à disques (13) et le disque d'espacement de dérivation (22) étant formé géométriquement de telle sorte que le disque d'espacement de dérivation (22) recouvre ladite au moins une ouverture d'entrée de dérivation (16) et le disque d'espacement de dérivation (22) (16) ne recouvre au moins pas complètement l'ouverture de disque de dérivation (18) du disque de dérivation (17).

11. Amortisseur de vibrations (1) selon la revendication 10, **caractérisé en ce qu'**un autre groupe de soupapes à disques (23) est disposé dans la chambre de pression (9) sur le piston de commande (8), l'autre groupe de soupapes à disques (23) comprenant une ouverture d'écoulement (24) vers ladite au moins une ouverture d'entrée de dérivation (16) .
